# EUROPEAN PATENT APPLICATION

(11) **EP 4 529 187 A1**
(43) Date of publication of application: **26.03.2025**
(21) Application number: 23862328.4
(22) Date of filing: 04.09.2023
(51) Int. Cl.: H04N 21/43, G06F 21/62, G06F 3/0484, G06F 21/84

(54) **SCREEN PROJECTION DISPLAY METHOD AND SYSTEM, AND ELECTRONIC DEVICE**

(30) Priority: 06.09.2022 CN 202211085098
(71) Applicant: Huawei Technologies Co., Ltd., Shenzhen, Guangdong 518129 (CN)
(72) Inventor: HE, Shujie, Shenzhen, Guangdong 518129 (CN)
(74) Representative: Gill Jennings & Every LLP
(86) International application number: PCT/CN2023/116684
(87) International publication number: WO 2024/051634

(57) **Abstract**

This application provides a projection-based display method and system, and an electronic device. The method is applied to a first electronic device, and the first electronic device establishes a projection connection to a second electronic device. The method includes: determining a security layer in a to-be-combined layer of a to-be-projected interface, where a flag bit of the security layer is a first value; changing the first value to a second value; combining the to-be-combined layer based on the second value, to normally display a display area corresponding to a composed security layer; and sending projection data to the second electronic device, where the projection data includes a composed layer. **In** this application, the value of the flag bit of the security layer is changed, to change only a composition manner of the security layer without changing another attribute of the security layer, so that the display area corresponding to the security layer can be normally displayed and security of the security layer can be further ensured.

## Description

This application claims priority to Chinese Patent Application No. 202211085098.6, filed with the China National Intellectual Property Administration on September 6, 2022 and entitled "PROJECTION-BASED DISPLAY METHOD AND SYSTEM, AND ELECTRONIC DEVICE", which is incorporated herein by reference in its entirety.

### TECHNICAL FIELD

This application relates to the field of electronic technologies, and more specifically, to a projection-based display method and system, and an electronic device.

### BACKGROUND

With development of application display technologies, more electronic devices support projection technologies. In the projection technologies, an application interface started on one electronic device (for example, a first electronic device) with a smaller display is projected onto another electronic device (for example, a second electronic device) with a larger display, to implement better viewing effect. In addition, an operating device on the second electronic device may be configured to operate the application interface.

However, when the application interface started on the first electronic device includes a security layer, and the application interface is projected onto the second electronic device, a display area corresponding to the security layer is black. As a result, a user cannot view information corresponding to the security layer, and cannot perform an operation on a display interface corresponding to the security layer, heavily reducing user experience.

### SUMMARY

This application provides a projection-based display method and system, and an electronic device, so that a security layer in a to-be-combined layer can be normally composed by changing a value of a flag bit of the security layer. This resolves a problem that a user cannot identify a display area corresponding to a security layer in a conventional technology, improving user experience.

According to a first aspect, a projection-based display method is provided. The method is applied to a first electronic device, and the first electronic device establishes a projection connection to a second electronic device. The method may be performed by the first electronic device or a chip installed in the first electronic device. The method includes: determining a security layer in a to-be-combined layer of a to-be-projected interface, where a flag bit of the security layer is a first value; changing the first value to a second value; combine the to-be-combined layer based on the second value, to normally display a display area corresponding to the security layer; and sending projection data to the second electronic device, where the projection data includes a composed layer.

According to the projection-based display method provided in the first aspect, the first electronic device searches for the security layer in the to-be-combined layer corresponding to the to-be-displayed interface, and then changes the first value of the security flag bit of the security layer to the second value, so that the first electronic device normally composes the security layer when combining the to-be-combined layer. The display area corresponding to the security layer composed in this manner may be normally displayed. In this method, a value of the flag bit of the security layer is changed, to change only a composition manner of the security layer without changing another attribute of the security layer. For example, the display area corresponding to the security layer is unavailable for screenshot, screen recording, multi-task display, and the like. This ensures security of the security layer when the security layer is normally displayed.

In a possible implementation of the first aspect, before the determining a security layer in a to-be-combined layer of a to-be-projected interface, the method further includes: determining that projection between the first electronic device and the second electronic device is non-secure projection. In a conventional technology, when projection between a first electronic device and a second electronic device is non-secure projection, a display area corresponding to a security layer is displayed in black. Therefore, when it is determined that projection between the first electronic device and the second electronic device is non-secure projection, the projection-based display method provided in this application may be used, to view the display area corresponding to the security layer while ensuring security of the layer.

For example, when the first electronic device and the second electronic device are connected in a wireless manner, the first electronic device is in a non-secure projection state.

For another example, when a flag bit of the to-be-projected interface indicates that the to-be-projected interface is a non-secure interface, the first electronic device is in a non-secure projection state.

In a possible implementation of the first aspect, in the composed layer, the display area corresponding to the security layer is unavailable for screenshot, screen recording, and multi-task display. In this implementation, security of the security layer can be ensured when the security layer is normally displayed.

In a possible implementation of the first aspect, a window manager service WMS in the first electronic device may change the first value to the second value.

In a possible implementation of the first aspect, an interface composition system SurfaceFlinger in the first electronic device may combine the to-be-combined layer based on the second value.

In a possible implementation of the first aspect, the first value may be 0×80, and the second value may be 0×30.

In a possible implementation of the first aspect, the first electronic device performs projection onto the second electronic device in a same-source projection manner or a different-source projection manner.

According to a second aspect, a projection-based display system is provided. The system includes a first electronic device and a second electronic device. The first electronic device is configured to perform projection onto the second electronic device. The first electronic device is configured to determine a security layer in a to-be-combined layer of a to-be-projected interface, where a flag bit of the security layer is a first value. The first electronic device is further configured to change the first value to a second value. The first electronic device is further configured to combine the to-be-combined layer based on the second value, to normally display a display area corresponding to a composed security layer. The first electronic device is further configured to combine the to-be-combined layer based on the second value, to normally display a display area corresponding to the security layer. The first electronic device is further configured to send projection data to the second electronic device, where the projection data includes a composed layer.

According to the projection-based display system provided in the second aspect, the first electronic device searches for a security layer in all to-be-combined layers of the to-be-displayed interface, and then changes the first value of the flag bit of the security layer to the second value, so that the first electronic device normally composes the security layer when combining all the to-be-combined layers, and after the first electronic device performs projection onto the second electronic device, the second electronic device can finally display an area corresponding to the security layer. In this case, a value of the flag bit of the security layer is changed, to change only a composition manner of the security layer without changing another attribute of the security layer. For example, the display area corresponding to the security layer is unavailable for screenshot, screen recording, multi-task display, and the like. This ensures security of the security layer when the security layer is normally displayed.

In a possible implementation of the second aspect, before the first electronic device determines the security layer in the to-be-combined layer of the to-be-projected interface, the first electronic device is further configured to determine that projection between the first electronic device and the second electronic device is non-secure projection. In a conventional technology, when projection between a first electronic device and a second electronic device is non-secure projection, a display area corresponding to a security layer is displayed in black. Therefore, when it is determined that projection between the first electronic device and the second electronic device is non-secure projection, the projection-based display method provided in this application may be used, to view the display area corresponding to the security layer while ensuring security of the layer.

For example, when the first electronic device and the second electronic device are connected in a wireless manner, the first electronic device is in a non-secure projection state.

For another example, when a flag bit of the to-be-projected interface indicates that the to-be-projected interface is a non-secure interface, the first electronic device is in a non-secure projection state.

In a possible implementation of the second aspect, in the composed layer, the display area corresponding to the security layer is unavailable for screenshot, screen recording, and multi-task display. In this implementation, security of the security layer can be ensured when the security layer is normally displayed.

In a possible implementation of the second aspect, a window manager service WMS in the first electronic device may change the first value to the second value.

In a possible implementation of the second aspect, an interface composition system SurfaceFlinger in the first electronic device may combine the to-be-combined layer based on the second value.

In a possible implementation of the second aspect, the first value may be 0×80, and the second value may be 0×30.

In a possible implementation of the second aspect, the first electronic device performs projection onto the second electronic device in a same-source projection manner or a different-source projection manner.

In a possible implementation of the second aspect, the first electronic device is configured to encode the composed layer to obtain the encoded layer; the first electronic device is further configured to pack the encoded layer according to the real-time transport protocol RTP or the RTP control protocol RTCP; and the first electronic device is configured to send the packed layer to the second electronic device. In this implementation, the first electronic device encodes and compresses all the to-be-combined layers, packs the encoded layers according to the RTP or the RTCP, and sends the packed layers to the second electronic device. Therefore, this can improve security of layer data, reduce a data transmission amount, and improve data transmission efficiency.

According to a third aspect, a communication apparatus is provided. The communication apparatus includes a unit configured to perform the steps in any one of the first aspect or the possible implementations of the first aspect.

According to a fourth aspect, a communication apparatus is provided. The communication apparatus includes at least one processor and a memory. The processor is coupled to the memory, the memory stores program instructions, and when the program instructions stored in the memory are executed by the processor, the method in any one of the first aspect or the possible implementations of the first aspect is performed.

According to a fifth aspect, a communication apparatus is provided. The communication apparatus includes at least one processor and an interface circuit. The at least one processor is configured to perform the method according to the first aspect or any one of the possible implementations of the first aspect.

According to a sixth aspect, an electronic device is provided. The electronic device includes the communication apparatus provided in the second aspect, or the electronic device includes the communication apparatus provided in the third aspect, or the electronic device includes the communication apparatus provided in the fourth aspect.

According to a seventh aspect, a computer program product is provided. The computer program product includes a computer program. When the computer program is executed by a processor, the method according to the first aspect or any one of the possible implementations of the first aspect is performed.

According to an eighth aspect, a computer-readable storage medium is provided. The computer-readable storage medium stores a computer program. When the computer program is executed, the method according to the first aspect or any one of the possible implementations of the first aspect is performed.

According to a ninth aspect, a chip is provided. The chip includes a processor, configured to invoke a computer program from a memory and run the computer program, so that a communication device on which the chip is installed performs the method according to the first aspect or any one of the possible implementations of the first aspect.

### BRIEF DESCRIPTION OF DRAWINGS

FIG. 1 is a schematic flowchart of displaying interface information by an electronic device in a projection scenario in a conventional technology;
FIG. 2 is a schematic flowchart of combining a to-be-combined layer of a first electronic device;
FIG. 3(a) to FIG. 3(c) are a diagram of same-source projection according to an embodiment of this application;
FIG. 4(a) to FIG. 4(c) are a diagram of different-source projection according to an embodiment of this application;
FIG. 5 is a diagram of a structure of an electronic device 100;
FIG. 6 is a block diagram of a software structure of an electronic device according to an embodiment of this application;
FIG. 7 is a schematic flowchart of a projection-based display method according to an embodiment of this application;
FIG. 8(a) to FIG. 8(c) are a diagram of a display interface of a security layer in same-source projection according to an embodiment of this application;
FIG. 9(a) to FIG. 9(c) are a diagram of a display interface of a security layer in different-source projection according to an embodiment of this application; and
FIG. 10 is a diagram of a chip system according to an embodiment of this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" means one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

"A plurality of" in embodiments of this application indicates two or more. It should be noted that in the descriptions of embodiments of this application, terms such as "first" and "second" are merely intended for distinction in description, but should not be construed as indicating or implying relative importance or indicating or implying a sequence.

With development of internet technologies, projection technologies are widely applied. Projection means projecting interface content displayed on a first electronic device onto a second electronic device, so that the second electronic device can also synchronously display the interface content displayed on the first electronic device. Interface content of a device (for example, a mobile phone or a tablet computer) with a small display may be projected onto a large-screen display device (for example, a television or a vehicle-mounted multimedia display) by using the projection technologies. This implements better viewing effect and helps a user perform an operation by using an operating device of the large screen device.

However, when an interface displayed on the first electronic device includes a security layer, the interface on the first electronic device is projected onto the second electronic device, and a display area of a security layer corresponding to a projection interface displayed on the second electronic device is black (displayed in black). Therefore, the user cannot identify display content of the display area on the second electronic device.

It should be understood that one interface is composed by a plurality of layers.

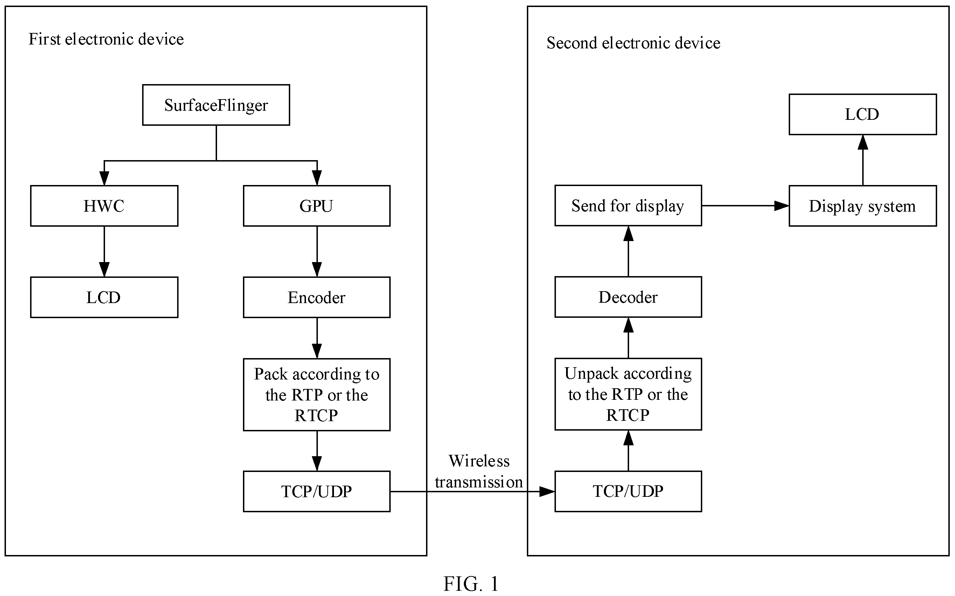

The following uses one projection initiation device, namely, a source device, and one projected device, namely, a target device, as an example to describe a process of displaying projection interface information in a conventional technology. FIG. 1 is a schematic flowchart of displaying interface information by an electronic device in a projection scenario in a conventional technology. As shown in FIG. 1, it is assumed that a first electronic device is a source device, and a second electronic device is a target device. In other words, when performing display, the first electronic device may simultaneously project display content on a display interface on the first electronic device onto the second electronic device for display. In addition to completing interface display of the first electronic device, the first electronic device further needs to combine the display content displayed on the second electronic device.

Specifically, when projection is started, an interface composition system (SurfaceFlinger) in the first electronic device creates one virtual screen, and interface information carried on the virtual screen may be sent to the second electronic device through a network. After combining an obtained to-be-combined layer corresponding to the display interface on the first electronic device, SurfaceFlinger sends a composed layer to a hardware graphics renderer (hardware composer, HWC) in the first electronic device. Then, the HWC composes, optimizes, and renders a remaining layer, and sends layer data obtained through composition, optimization, and rendering to an LCD, so that the first electronic device displays an interface corresponding to the composed layer.

In addition, SurfaceFlinger in the first electronic device further needs to send, to a graphics processing unit (graphics processing unit, GPU) in the first electronic device, the to-be-combined layer corresponding to the interface information displayed on the virtual screen, for remaining layer composition.

After completing layer composition, the GPU in the first electronic device outputs to-be-encoded data. For example, a format of the to-be-encoded data may be RGBA8888. The GPU sends the to-be-encoded data to an encoder. After performing encoding and compression, the encoder packs encoded and compressed data according to the real-time transport protocol (real-time transport protocol, RTP) or the RTP control protocol (RTP control protocol, RTCP), and then sends the packed data to the second electronic device according to the transmission control protocol (transmission control protocol, TCP) or the user datagram protocol (user datagram protocol, UDP). For example, the packed data may be sent to the second electronic device in a wireless transmission manner.

After receiving the packed data sent by the first electronic device, the second electronic device unpacks the received data according to the RTP or the RTCP, and sends the unpacked data to the decoder for decoding, to obtain decoded content, that is, obtain the interface information. The second electronic device sends the obtained interface information to a display system, to display the interface information by using an LCD.

The following describes a specific process in which SurfaceFlinger combines the to-be-combined layer when the to-be-combined layer includes a security layer.

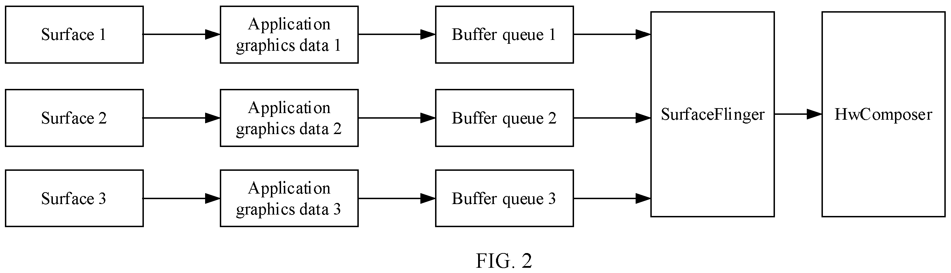

For example, a graphics rendering framework of the first electronic device may be a graphics pipeline rendering framework of an Android system. Certainly, the software system may further include but is not limited to operating systems such as Symbian (Symbian)^{®}, Windows^{®}, Apple (iOS)^{®}, Blackberry (Blackberry)^{®}, and Harmony (Harmony)OS^{®}. This is not limited in this application. When the graphics rendering framework of the first electronic device is the graphics pipeline rendering framework of the Android system, SurfaceFlinger combines the to-be-combined layer by using a composition process shown in FIG. 2. The following provides specific descriptions with reference to FIG. 2.

It may be understood that each window of an Android application corresponds to one canvas, namely, a surface. The surface may be understood as one interface for exchanging buffers between a graphics data producer and a graphics data user. Each surface contains a plurality of buffers (buffers). Graphics are transferred by using the buffer as a carrier. The surface means further packing of the buffer.

As shown in FIG. 2, when a user starts a specific application to perform projection, the application in the electronic device first applies for a surface (Surface) handle of a native buffer, to determine a to-be-displayed graphic, for example, a size, a location, and display content. The Android system generates a plurality of pieces of application graphics data in a to-be-displayed interface based on the application. One surface corresponds to one piece of application graphics data, and each piece of application graphics data corresponds to one buffer queue (Buffer Queue).

It should be understood that each surface includes application graphics data, and the surface and the application graphics data form one layer (layer).

For example, the display interface includes three pieces of application graphics data. In other words, the display interface includes three surfaces, each surface corresponds to one layer, and each layer corresponds to one buffer queue, namely, surface 1→application graphics data 1→buffer queue 1→layer 1; surface 2-application graphics data 2-buffer queue 2-layer 2; and surface3→application graphics data 3→buffer queue 3-layer 3. Herein, → indicates "corresponding to".

It should be noted that the buffer queue is equivalent to glue between Android graphics components, and may be understood as a buffer queue. A producer-consumer mode is used to adjust a fixed cycle of a buffer from a production queue to a consumption queue. Once the producer hands over a buffer of the producer, SurfaceFlinger is responsible for combining all content into a display part. The buffer queue may also be understood as a combination of a plurality of buffers.

Then, SurfaceFlinger combines, based on window information provided by a window manager service (window manager service, WMS), buffer queues generated through rendering, that is, combines all layers (corresponding to surfaces). It should be understood that the buffer queue is a link between the surface and the layer.

In a conventional technology, when a to-be-combined layer includes a security layer, SurfaceFlinger clears buffer queue data corresponding to the security layer, and then performs composition.

For example, when a layer 1 corresponding to a surface 1 is a secure layer, SurfaceFlinger clears data of a buffer queue 1 in the surface 1 when combining the layer 1, a layer 2, and a layer 3, and then combines the layers. In other words, displayed information of the layer 1 is empty, and data of the other layers (layer 2 and layer 3) is normally retained.

Finally, after completing layer composition, a first electronic device sends a composed layer to a second electronic device. An HWC in the second electronic device performs processing and rendering optimization on some layers, and the HWC sends the finally rendered and optimized layer to a display system of the second electronic device for display. It may be understood that, in a layer composition process, display data corresponding to the security layer is cleared, and data corresponding to the security layer in a display interface is empty. Therefore, on the second electronic device, a display area that corresponds to the security layer and that is viewed by a user is displayed in black.

It should be understood that, according to different projection requirements, a projection manner may include same-source projection and different-source projection, and the foregoing method for combining the to-be-combined layer including the security layer may be applied to same-source projection and different-source projection.

Same-source projection means projecting, onto the second electronic device, one or more application interfaces started on the first electronic device. In the same-source projection mode, the first electronic device sends, to the second electronic device through one channel of encoding, a standard video stream obtained by encoding surfaces corresponding to all application interfaces rendered on a home screen, to display, on a display of the second electronic device, all the application interfaces rendered on the home screen. That is, same-source projection means projecting a default interface on the first electronic device onto the display of the second electronic device, for example, mirror projection.

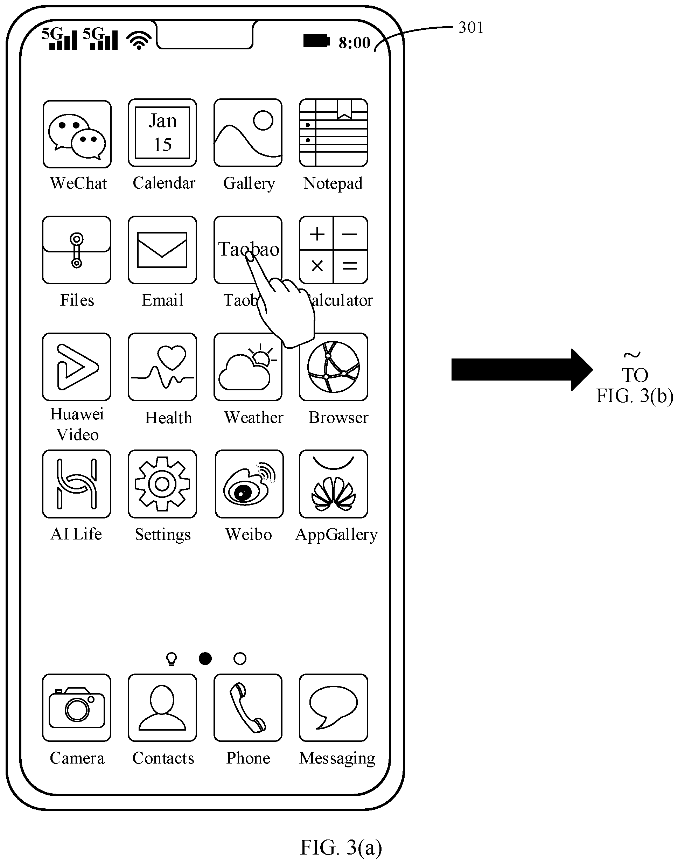

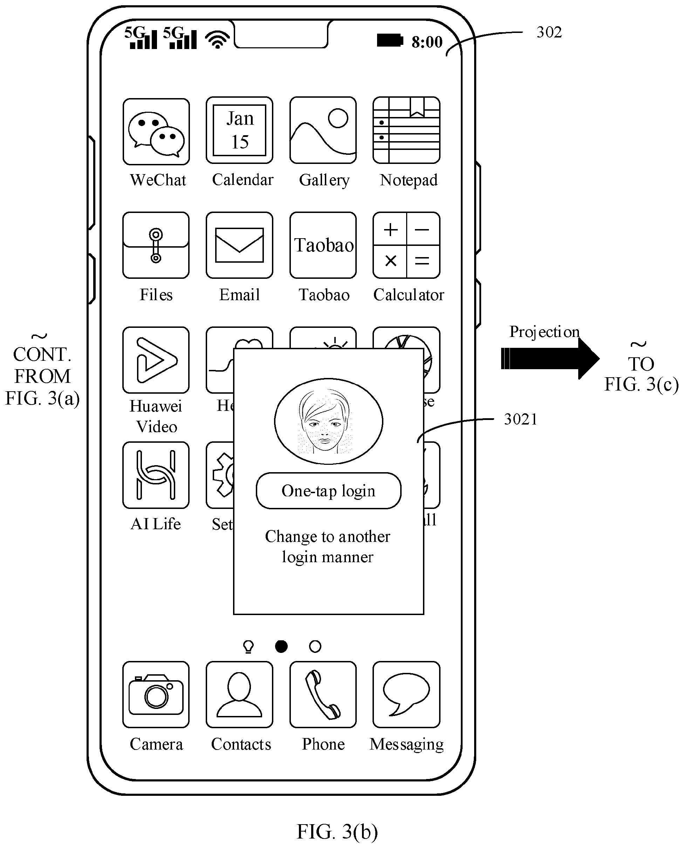

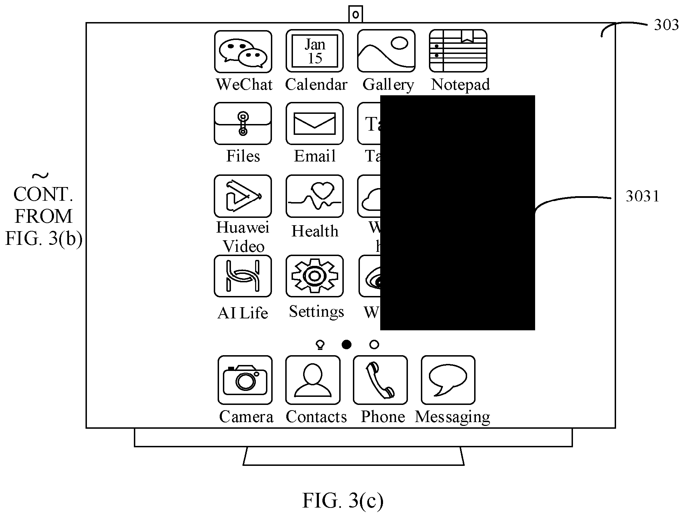

FIG. 3(a) to FIG. 3(c) are a diagram of same-source projection according to an embodiment of this application. FIG. 3(a) shows a current home interface 301 of the smartphone, and the home interface 301 is a home page interface of the smartphone. In response to an operation of tapping a Taobao application icon (a "Taobao" icon shown in FIG. 3(a)) by the user, as shown in FIG. 3(b), the smartphone renders, on a home screen, the home page interface 302 and a Taobao login interface 3021 included in the home page interface 302. Based on same-source projection, after a large screen device receives a standard video stream corresponding to surface encoding that corresponds to an application interface rendered on the home screen of the smartphone, the large screen device displays, based on the standard video stream, a home page interface 303 on the home screen, and a Taobao login interface 3031 included in the home page interface 303. As shown in FIG. 3(c), because a layer corresponding to the Taobao login interface 3031 is a security layer, after the Taobao login interface 3021 on the smartphone is displayed on the large screen device, the Taobao login interface 3021 is displayed in a form of the interface 3031, namely, an interface displayed in black. For a display process including the security layer, refer to the description in FIG. 2. Details are not described herein again.

It should be understood that, in a scenario shown in FIG. 3(b), the Taobao login interface 3021 on the smartphone is displayed in a form of a small window. In another scenario, the Taobao login interface 3021 may alternatively be displayed in full screen. In this case, when the Taobao login interface 3021 is displayed in full screen and is projected onto the large screen device, the Taobao login interface 3031 of the large screen device may also be displayed in full screen and is an interface displayed in black.

In a different-source projection mode, the first electronic device uses two channels of encoding. One channel of encoding is used to send a display interface on a display of the first electronic device for display. The other channel of encoding is used to send, to the second electronic device, information such as a standard video stream corresponding to an application interface rendered on a virtual screen.

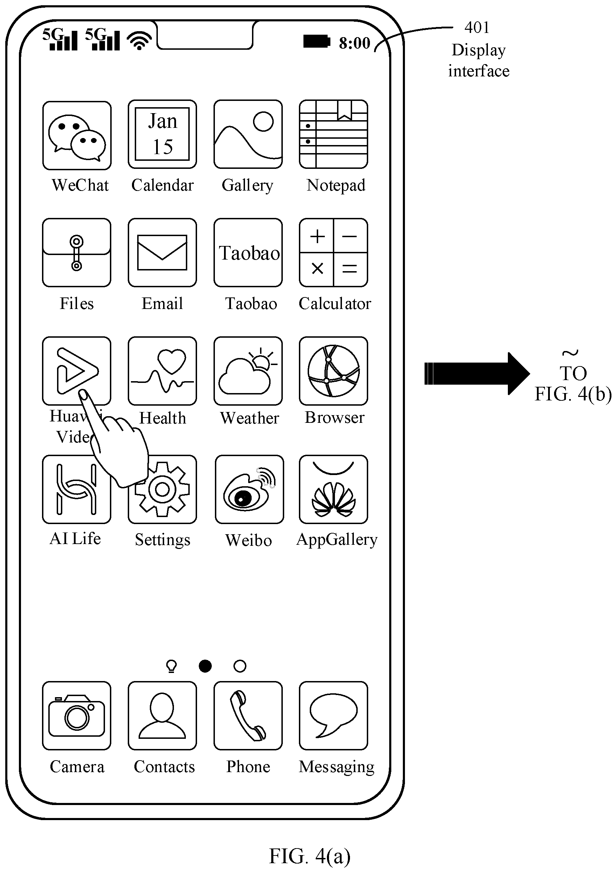

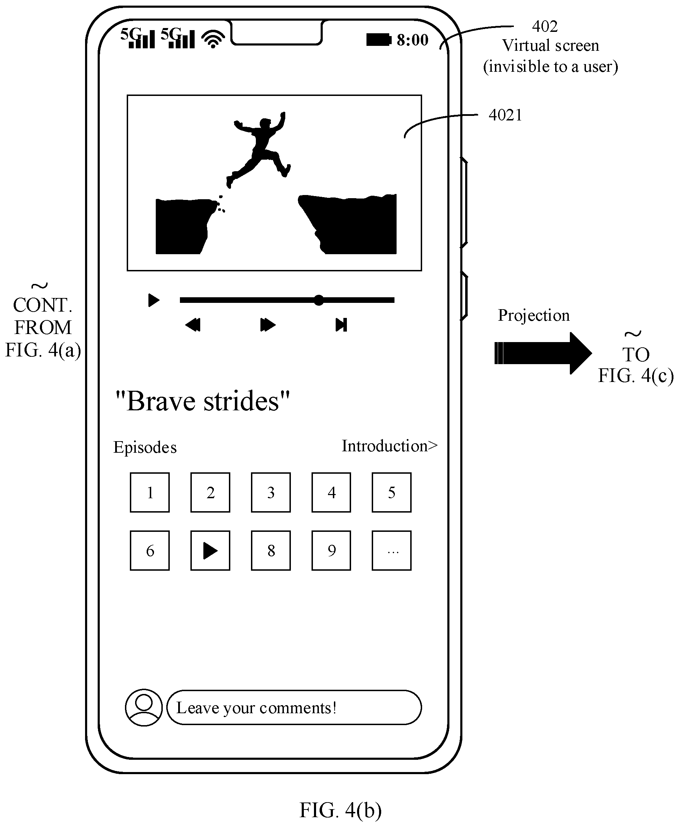

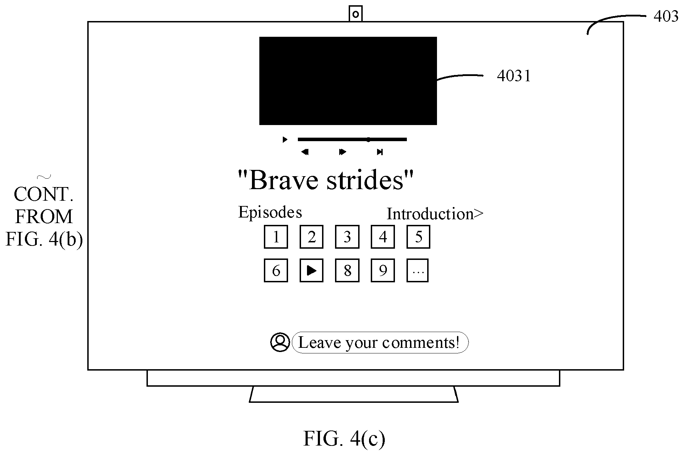

FIG. 4(a) to FIG. 4(c) area diagram of different-source projection according to an embodiment of this application. FIG. 4(a) shows a current home interface 401 of the smartphone, and the home interface 401 is a home page interface of the smartphone. In response to an operation of tapping a Huawei video application icon (a "Huawei video" icon shown in FIG. 4(a)) by a user, the mobile phone renders the home interface 401 on a home screen, and renders a Huawei video interface 402 (for example, a "Brave strides" documentary shown in FIG. 4(b)) and an interface 4021 included in the interface 402 on a virtual screen. An interface currently visible to the user is an interface shown in FIG. 4(a), and an interface shown in FIG. 4(b) is an interface displayed on the virtual screen, namely, an interface invisible to the user. Based on different-source projection, as shown in FIG. 4(c), after the large screen device (namely, the second electronic device) receives a standard video stream that is from the smartphone (namely, the first electronic device) and that corresponds to the application interface rendered on the virtual screen, the large screen device displays the application interface on the virtual screen of the first electronic device based on the standard video stream. It should be understood that, because a video display interface on the virtual screen includes a security layer 4021, an interface 4031 displayed on a home interface 403 of the large screen device is an interface displayed in black. Similarly, for a process of displaying the interface including the security layer, refer to the description in FIG. 2, and details are not described herein again.

It should be understood that, in a scenario shown in FIG. 4(b), the Huawei video interface 4021 on the smartphone is displayed in a form of a small window. In another scenario, the Huawei video interface 4021 may alternatively be displayed in full screen. In this case, when the Huawei video interface 4021 is displayed in full screen, and is projected onto the large screen device, the Huawei video interface 4031 of the large screen device may also be displayed in full screen, and is an interface displayed in black.

It may be understood that the same-source projection mode and the different-source projection mode each have advantages and disadvantages. For example, the same-source projection mode can ensure application continuity. However, in the different-source projection mode, when switching between different screens is performed, an application needs to be restarted. For example, if an application A is displayed on the smartphone, an application B is created on the virtual screen, and the application B is projected onto the large screen device for display, the application A needs to be restarted on the large screen device, to view the application A on the large screen device. However, the different-source projection mode has better isolation. For example, the different-source projection mode may provide an independent control display (namely, the display of the first electronic device and the display of the second electronic device) for the user to process different interfaces.

In conclusion, when the to-be-combined layer of the first electronic device includes the security layer, after the composed layer is sent to the second electronic device and displayed, the display area corresponding to the security layer is displayed in black. Consequently, the user cannot normally view application content corresponding to the security layer, and cannot operate the display area corresponding to the security layer by using an operation device on the second electronic device, heavily reducing user experience.

In view of this, this application provides a projection-based display method. A first electronic device searches for a security layer in to-be-combined layers, and then changes a first value of a flag bit of the security layer to a second value. The first value identifies or indicates the layer as a security layer, and the second value indicates to normally compose the security layer when combining the to-be-combined layer, so that a display area corresponding to the security layer can be normally displayed on a composed interface. Then, the first electronic device combines the to-be-combined layer based on the second value, and when the first electronic device projects the composed layer including the security layer onto the second electronic device, the display area corresponding to the security layer can be normally displayed on the second electronic device. According to the method provided in this application, a user can obtain display information of the security layer in the second electronic device, and perform, by using hardware (for example a keyboard, a mouse, a microphone, and a speaker) of the second electronic device, an operation on an interface in which the security layer is located, improving user experience.

For example, in this application, a WMS in the first electronic device may be used to search for the security layer in the to-be-combined layer, the first value corresponding to the security layer is changed to the second value. Then, SurfaceFlinger in the first device normally composes the security layer by using an indication of the second value, and sends a composed security layer to the second electronic device for display.

The projection-based display method provided in embodiments of this application may be applied to a communication system including the first electronic device and the second electronic device. For example, when the first electronic device performs projection onto the second electronic device, the first electronic device and the second electronic device may be connected in a wireless manner. For example, the first electronic device may establish a wireless communication connection to the second electronic device through "touch", "scan" (for example, scanning a two-dimensional code or barcode), "proximity-based automatic discovery" (for example, by using Bluetooth or wireless fidelity (wireless fidelity, Wi-Fi)), or the like. The first electronic device and the second electronic device may comply with a wireless transmission protocol, and transmit information by using a wireless connection transceiver. The wireless transmission protocol may include but is not limited to a Bluetooth (Bluetooth, BT) transmission protocol, a Wireless Fidelity (wireless fidelity, Wi-Fi) transmission protocol, or the like. For example, the Wi-Fi transmission protocol may be a Wi-Fi P2P transmission protocol. The wirelessly connected transceiver includes but is not limited to a Bluetooth transceiver, a Wi-Fi transceiver, or the like. Information between the first electronic device and the second electronic device is transmitted through wireless pairing. The information transmitted between the first electronic device and the second electronic device includes but is not limited to content data (for example a standard video stream) to be displayed, a control instruction, and the like.

The first electronic device and the second electronic device include wireless communication solutions such as a wireless local area network (wireless local area network, WLAN), for example, a wireless fidelity (wireless fidelity, Wi-Fi) network, Bluetooth (Bluetooth, BT), a global navigation satellite system (global navigation satellite system, GNSS), frequency modulation (frequency modulation, FM), near field communication (near field communication, NFC) technologies, infrared (infrared, IR) technologies, or the like.

The wireless communication technologies may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, a GNSS, a WLAN, NFC, FM, IR technologies, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

It should be understood that secure projection in this embodiment of this application means that projection is performed between the first electronic device and the second electronic device in a wired connection manner. For example, when both the first electronic device and the second electronic device support a HDCP protocol, it indicates that secure projection is performed between the first electronic device and the second electronic device.

Alternatively, a wired communication connection is established between the first electronic device and the second electronic device by using a video graphics adapter (video graphics array, VGA), a digital visual interface (digital visual interface, DVI), a high-definition multimedia interface (high-definition multimedia interface, HDMI), a data transmission line, or the like.

That the first electronic device and the second electronic device are connected in a wireless manner may be understood as that when the first electronic device performs projection onto the second electronic device, non-secure projection is performed between the first electronic device and the second electronic device.

In this embodiment of this application, both the first electronic device and the second electronic device include displays. The first electronic device and the second electronic device may include but are not limited to a smartphone, a netbook, a tablet computer, a smartwatch, a smart band, a phone watch, a smart camera, a palmtop computer, a personal computer (personal computer, PC), a personal digital assistant (personal digital assistant, PDA), a portable multimedia player (portable multimedia player, PMP), an (augmented reality, AR) device/a virtual reality (virtual reality, VR) device, a television, a projection device, a somatosensory game console in a human-computer interaction scenario, or the like. Alternatively, the first electronic device and the second electronic device may be electronic devices of another type or structure. This is not limited in this application. Generally, to maximize an advantage of projection technologies, the projection-based display method may be applied between a portable device (namely, the first electronic device) and a large screen device (namely, the second electronic device). For example, the portable device is a smartphone, and the large screen device is a notebook computer. For another example, the portable device is a tablet computer, and the large screen device is a television. Certainly, a specific device to which the projection-based display method is applicable is not limited in this application. As described above, the first electronic device and the second electronic device may be any electronic device that supports projection, for example, a smartphone, a netbook, a tablet computer, a smartwatch, a smart band, a telephone watch, a smart camera, a palmtop computer, a PDA, a PMP, an AR/VR device, or a television.

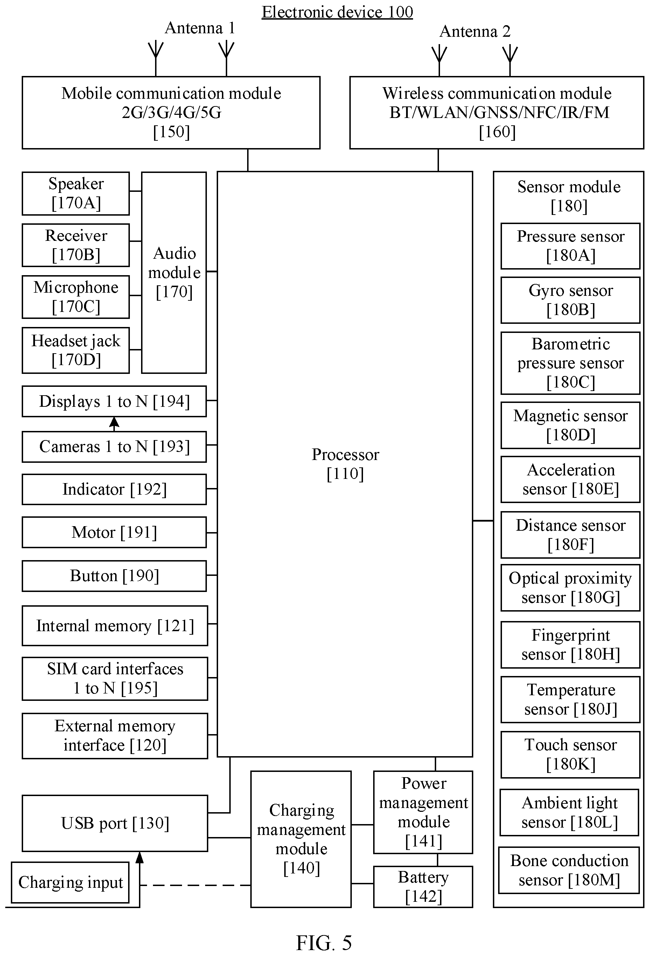

For example, FIG. 5 is a diagram of a structure of an electronic device 100 (for example, a first electronic device, or a second electronic device). The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The port may be further configured to connect to another first electronic device, for example, an AR device.

It can be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 may further supply power to the first electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC) technologies, infrared (infrared, IR) technologies, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using wireless communication technologies. The wireless communication technologies may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, IR technologies, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like.
In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB port 130, or may be a 3.5 mm first open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a messaging application icon, an instruction for viewing an SMS message is performed. When a touch operation whose touch operation intensity is greater than or equal to the first pressure threshold is performed on the messaging application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover by using the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the first electronic device, and is used in an application like switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, like a photodiode. The light emitting diode may be an infrared light emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to the ear for a call, to automatically turn off a screen to save power. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal by parsing a vibration signal of a vibrating bone of a vocal-cord part obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

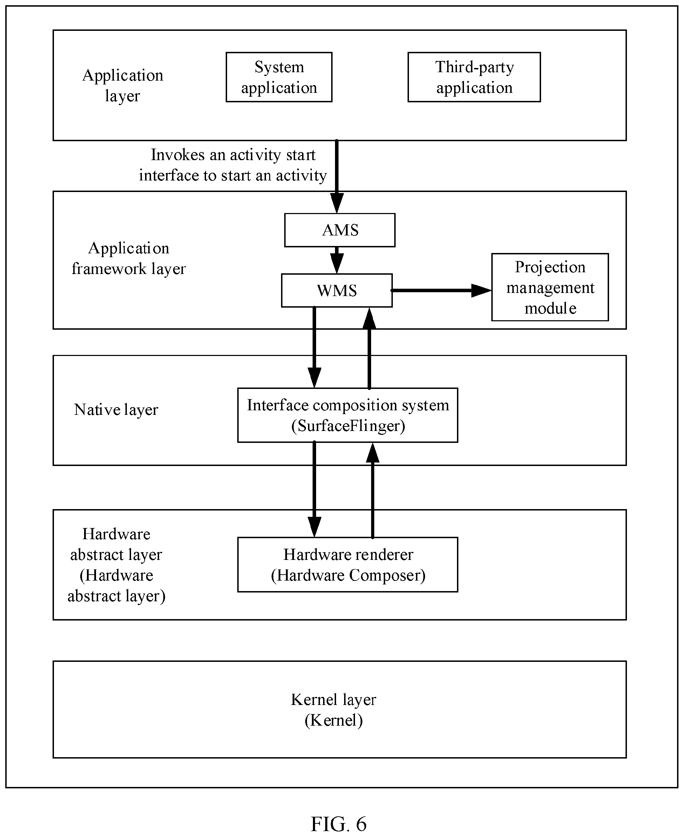

FIG. 6 is a block diagram of a software structure of a first electronic device according to an embodiment of this application.

In a layered architecture, software is divided into several layers, and each layer has a clear role and task. The layers communicate with each other through a software interface. In some embodiments, an Android system is divided into five layers: an application layer, an application framework layer, a native (Native) layer, a hardware abstract layer, and a kernel layer (Hardware) from top to bottom.

The application layer may include a series of application packages.

As shown in FIG. 6, the application includes a system application and a third-party application. An application on the electronic device may be the system application (for example, an application installed on the electronic device when an operating system is installed before the electronic device is delivered from a factory), or may be the third-party application (for example, an application downloaded and installed by a user from an application store). This is not limited in this embodiment of this application. For example, the application may include the system application (not shown in FIG. 6) like camera, gallery, calendar, phone, map, navigation, WLAN, Bluetooth, music, videos, game, shopping, travel, and instant messaging (for example, messaging). The application may further include the third-party application (not shown in FIG. 6), like TikTok, WeChat, and Taobao.

The application framework layer provides an application programming interface (application programming interface, API), and a programming framework for an application at the application layer. As shown in FIG. 6, the application framework layer may include a window manager service (window manager service, WMS), an activity manager service (activity manager service, AMS), and a projection management module. In some embodiments, the application framework layer may further include a content provider, a view system, a phone manager, a resource manager, a notification manager, and the like (not shown in FIG. 6).

The WMS carries data and an attribute that are related to a window, and is used to manage a status related to the window, for example, is used to manage a window attribute and event dispatching. Managing a window program means sequentially outputting a display request of an application to a physical screen or another display device based on the request with assistance of an application server and the WMS. Event dispatching means dispatching user events from a keyboard, a physical button, a touchscreen, a mouse, a trackball (Trackball), or the like to a corresponding control or window. The window manager service may further obtain a size of a display, determine whether there is a status bar, perform screen locking, perform screenshot, and the like.

For example, in this embodiment of this application, the WMS may traverse a flag bit corresponding to a to-be-combined layer, find a security layer by searching for a first value of a security flag bit, and then change the first value of the security layer to a second value.

For example, the first value may be 0×80, and the first value 0×80 identifies the layer as the security layer. Then, the first value 0×80 of the security layer is changed to the second value 0×30. The second value 0×30 indicates that the security layer is normally composed, without black rendering.

It should be understood that the first value or the second value or both may alternatively be other identifiers. This is not limited in this embodiment of this application.

The AMS is responsible for managing an activity, starting, switching, and scheduling components in a system, managing and scheduling applications, and the like. Specifically, data classes used to store a process (Process), an activity (Activity), and a task (Task) are defined in the AMS. A data class corresponding to the process (Process) may include process file information, memory status information of the process, an activity, a service, and the like included in the process. Activity information can be stored in activity stack. Activity stack is used to schedule all activities of an application. Activity stack may specifically store information about all running activities (namely, final Array List mHistory), for example, interface configuration information. For example, a running activity can be stored in new array list. Activity stack can further store information about historical activities, for example, interface configuration information. It should be noted that an activity does not correspond to one application, and an activity thread corresponds to one application. Therefore, that Android allows a plurality of applications to run simultaneously actually means allowing a plurality of activity threads to run simultaneously.

In Android, the basic idea of activity scheduling is as follows: When an application process needs to start a new activity or stop a current activity, the application process reports to the AMS. The AMS internally records all application processes. When receiving a start or stop report, the AMS updates an internal record and then notifies a corresponding client process to run or stop a specified activity. Because there are all activity records inside the AMS, the AMS can schedule these activities and automatically close background activities based on statuses of the activities and a system memory.

The content provider is used to: store and obtain data, and enable the data to be accessed by an application. The data may include a video, an image, audio, calls that are made and received, a browsing history and a bookmark, a phone book, and the like.

The view system includes visual controls, for example, a control for displaying a text and a control for displaying an image. The view system may be used to construct an application. A display interface may include one or more views. For example, a display interface including an SMS message notification icon may include a text display view and an image display view.

The phone manager is used to provide a communication function of the first electronic device, for example, management of a call status (including answering, declining, or the like).

The resource manager provides various resources, such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, a prompt tone is made, the first electronic device vibrates, or the indicator light flashes.

The projection management module is configured to manage a projection-related transaction. For example, a video stream corresponding to an application interface, an interface configuration parameter, and the like are transmitted. For example, the projection management module may be Huawei assistant, Huawei manager, or the like. For example, the assistant may be a module configured to exchange projection-related information with another electronic device (for example, a second electronic device). For example, the assistant may provide an API and a programming framework for communication between the first electronic device and the another electronic device (for example, the second electronic device). For example, when a projection device is a computer, the manager may be a computer manager, a computer assistant, or the like. In some possible embodiments, the projection management module can project a locally running program onto another device, and receive and parse a video stream and related information that are sent by another device, to locally display an application running on the another device. In some possible embodiments, the projection management module is divided, and can implement only one function in the foregoing embodiment, to meet requirements of different device forms for a projection function.

The native layer includes an interface service (SurfaceFlinger), a hardware renderer (hardware composer, HWC), and the like. Each application may correspond to one or more graphical interfaces, and each interface is called one surface. In an Android implementation, SurfaceFlinger is one service that provides an interface combiner (surface composer) function in a system range, and can combine 2D and 3D surfaces of various applications. SurfaceFlinger can delegate some composition work to the HWC, to share workload of OpenGL and GPU.

In this embodiment of this application, SurfaceFlinger combines to-be-combined layers corresponding to a display interface, and when traversing a flag bit of each layer, SurfaceFlinger normally composes buffer queue data of a secure layer corresponding to a flag bit 0×30, so that a display area corresponding to the secure layer can be normally viewed from a perspective of the user.

The hardware abstract layer (hardware abstract layer, HAL) is used to abstract hardware. For example, the hardware abstract layer may include an audio hardware abstract layer, a Bluetooth hardware abstract layer, a camera hardware abstract layer, a hardware renderer abstract layer, and another hardware device abstract layer. The hardware renderer abstract layer may be connected to a hardware renderer algorithm library. After graphics data is displayed on a device screen, the hardware renderer abstract layer may invoke an algorithm in the hardware renderer algorithm library to perform rendering. The hardware renderer is a core of all Android graphics rendering.

The kernel layer is a layer between hardware and software. The kernel layer may include a display driver, an input/output device driver (for example, a keyboard, a touchscreen, a headset, a speaker, or a microphone), a device node, a camera driver, an audio driver, a sensor driver, and the like. The user performs an input operation by using an input device. The kernel layer may generate a corresponding original input event based on the input operation, and store the original input event in the device node.

It should be noted that, FIG. 6 uses only an Android system with a layered architecture as an example, to describe a process of displaying an application interface in a projection-based display scenario. A specific architecture of a software system of the electronic device is not limited in this application. For detailed descriptions of a software system of another architecture, refer to a conventional technology. For example, the software system may further include but is not limited to an operating system, like Symbian (Symbian)^{®}, Windows^{®}, Apple (iOS)^{®}, BlackBerry (Blackberry)^{®}, and Harmony (Harmony)OS^{®}. This is not limited in this application. For ease of understanding, in the following embodiment of this application, an electronic device with the structures shown in FIG. 5 and FIG. 6 is used as an example, to specifically describe a projection-based display method according to an embodiment of this application with reference to the accompanying drawings and application scenarios.

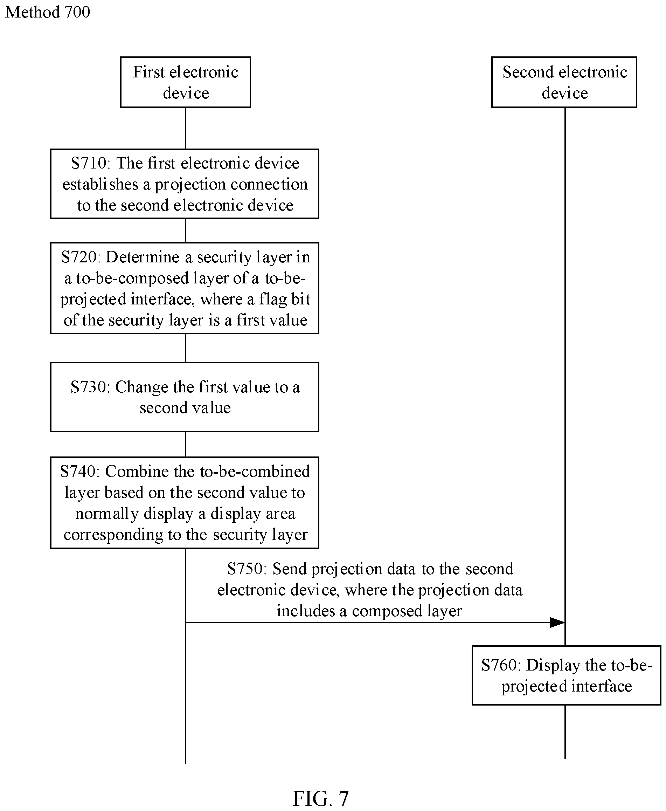

FIG. 7 is a schematic flowchart of a projection-based display method according to an embodiment of this application. As shown in FIG. 7, the method 700 includes S710 to S760.

S710: A first electronic device establishes a projection connection to a second electronic device.

In this embodiment of this application, the first electronic device and the second electronic device may be connected in a wired or wireless manner. The connection manner of the first electronic device and the second electronic device is not described herein again.

S720: The first electronic device determines a security layer in a to-be-combined layer of a to-be-projected interface, where a flag bit of the security layer is a first value.

It should be understood that, performing projection onto the second electronic device by the first electronic device means projecting a to-be-displayed interface created by the first electronic device onto the second electronic device. It should be further understood that the to-be-displayed interface includes a plurality of to-be-combined layers.

When a user performs projection, the first electronic device generates, in response to an operation of starting an application by the user, the plurality of to-be-combined layers corresponding to the to-be-displayed interface. Before the first electronic device projects the to-be-displayed interface onto the second electronic device, the first electronic device traverses the to-be-combined layer, and finds the security layer in the to-be-combined layer.

Optionally, in a possible implementation, the first electronic device may determine, by using a flag bit corresponding to each to-be-combined layer, whether the to-be-combined layer includes the security layer.

It should be understood that, based on a native requirement of Android, when the to-be-combined layer includes the security layer, security announcement needs to be performed on the security layer. Generally, the security layer is marked with a security flag bit.

For example, a first value of the security flag bit may be 0×80. Certainly, the security flag bit may alternatively be marked by using another identifier, or the first value may be another value. This is not limited in this embodiment of this application.

It should be further understood that the first value of the security flag bit of the security layer indicates SurfaceFlinger to clear buffer queue data of the security layer when combining the to-be-combined layer. In this case, after the to-be-combined layer is combined, there is no data of display information of the security layer, and finally, a display area corresponding to the security layer projected onto the second electronic device is black. In addition, the first value of the security flag bit further indicates that the display area corresponding to the security layer is unavailable for screenshot, screen recording, and multi-task display.

In a possible implementation, when the user starts the application, an AMS in the first electronic device invokes an activity start interface to start an activity, and then a WMS in the first electronic device traverses a to-be-combined layer of the application, and determines whether the to-be-combined layer includes a security layer.

For example, the WMS in the first electronic device may traverse a flag bit of each to-be-combined layer of the application, and determine whether the to-be-combined layer includes a security flag bit of the security layer.

S730: The first electronic device changes the first value to a second value.

In this embodiment of this application, after finding the security layer, the first electronic device may change the security flag bit corresponding to the security layer, so that the security layer can be normally composed on the first electronic device. Finally, after the to-be-displayed interface is projected onto the second electronic device, the display area corresponding to the security layer can be normally displayed on the second electronic device.

In some possible implementations, the first electronic device may change the first value corresponding to the security layer to the second value.

It should be understood that the first value indicates that the layer is the security layer. In this case, the first electronic device performs security processing when composing the security layer, that is, clears information about the display area corresponding to the security layer. In addition, the first electronic device ensures that the security layer is unavailable for screenshot, screen recording, and multi-task display. The second value indicates the first electronic device to normally display display data corresponding to the security layer in the to-be-combined layer when combining the to-be-combined layer.

It should be further understood that, the second value is merely used as an indication identifier, and indicates the first electronic device to normally display the information about the display area corresponding to the security layer when combining the to-be-combined layer, and ensure that the security layer is unavailable for screenshot, screen recording, and multi-task display. In other words, regardless of whether a value of the security flag bit corresponding to the security layer is the first value or the second value, the security layer is unavailable for screenshot, screen recording, and multi-task display.

In a possible implementation, the first value indicates SurfaceFlinger in the first electronic device to clear buffer queue data of the security layer when combining the to-be-combined layer. In this case, after the to-be-combined layer is combined, there is no data of display information of the security layer, and finally, the display area corresponding to the security layer projected onto the second electronic device is black. The second value indicates SurfaceFlinger in the first electronic device to normally display the buffer queue data of the security layer when combining the to-be-combined layer. In this case, after the to-be-displayed interface is combined, the data of the display information of the security layer is retained, and finally, the display area corresponding to the security layer projected onto the second electronic device is normally displayed.

For example, the first value may be the security flag bit 0×80 of the security layer in step S720, and the second value may be 0×30. Certainly, the second value may alternatively be another value. This is not limited in this embodiment of this application.

In this embodiment, the first electronic device searches flag bits of all to-be-combined layers of the to-be-displayed interface, to find the security layer in the to-be-combined layers. Then, the first value of the security flag bit corresponding to the security layer is changed to the second value, so that the first electronic device normally composes a security layer when combining all the to-be-combined layers, and after the first electronic device performs projection onto the second electronic device, the second electronic device can finally display an area corresponding to the security layer. This implementation of changing the value of the security flag bit can change only a composition manner of the security layer without changing another attribute of the security layer. For example, the display area corresponding to the security layer is unavailable for screenshot, screen recording, multi-task display, and the like. This can ensure security of the security layer when the security layer is normally displayed.

S740: The first electronic device combines the to-be-combined layer based on the second value, to normally display the display area corresponding to the security layer.

When the first electronic device detects that the security flag bit corresponding to the security layer in the to-be-combined layer is the second value, the first electronic device normally composes the security layer in the to-be-combined layer when combining the to-be-combined layer, that is, reserves the display information of the security layer, so that the display area corresponding to the security layer in the to-be-combined layer that is projected onto the second electronic device can be normally displayed.

In a possible implementation, when combining the to-be-combined layer, SurfaceFlinger in the first electronic device traverses the to-be-combined layer, and when a security flag bit of a traversed security layer is the second value, the security layer in the to-be-combined layer is normally composed.

Specifically, when SurfaceFlinger in the first electronic device combines the to-be-combined layer, SurfaceFlinger first traverses the to-be-combined layer, and when finding that the security flag bit of the traversed security layer is the second value, SurfaceFlinger normally combines all the layers based on buffer queue data corresponding to the security layer, instead of clearing the buffer queue data corresponding to the security layer when combining the to-be-combined layer, as shown in FIG. 2. It should be understood that, after SurfaceFlinger normally composes a security layer based on an indication of the second value, after receiving a composed layer of the first electronic device, the second electronic device can normally display the display area corresponding to the security layer only after local rendering.

It should be noted that SurfaceFlinger may combine all the layers, or SurfaceFlinger may delegate some composition work to an HWC for layer composition. For example, SurfaceFlinger can provide a complete list of all the layers for the HWC so that the HWC can determine, based on a hardware capability of the HWC, specific layers to be combined.

S750: The first electronic device sends projection data to the second electronic device, where the projection data includes a composed layer.

The first electronic device sends the projection data to the second electronic device, so that the second electronic device displays a projection interface corresponding to the to-be-displayed interface. In this embodiment of this application, the projection data includes the composed layer.

In a possible implementation, after combining the to-be-combined layer, SurfaceFlinger in the first electronic device may send the composed layer to an HWC in the second electronic device, and after the HWC in the second electronic device performs rendering, the second electronic device displays the projection interface corresponding to the to-be-displayed interface.

Optionally, when sending the composed layer, the first electronic device may encode the composed layer into a video stream, pack encoded and compressed video stream data according to the real-time transport protocol RTP or the RTCP control protocol, and then send the packed video stream to the second electronic device.

Specifically, after combining all the to-be-combined layers, SurfaceFlinger in the first electronic device sends the composed layer to an encoder to generate the standard video stream. Then, the first electronic device packs the obtained standard video stream according to the RTP or the RTCP. Finally, the first electronic device sends the packed data to the second electronic device by using the TCP or the UDP.

In this embodiment, the first electronic device encodes and compresses the composed layer, packs the encoded layer according to the RTP or the RTCP, and sends the packed layer to the second electronic device. Therefore, this can improve security of layer data, reduce a data transmission amount, and improve data transmission efficiency.

S760: The second electronic device displays the to-be-projected interface.

In this embodiment of this application, after receiving the video stream of the composed layer sent by the first electronic device, the second electronic device needs to parse the video stream to obtain all to-be-displayed layers.

For example, the second electronic device may unpack the video stream of the composed layer according to the RTP or the RTCP, and decode the unpacked layer, to obtain display information of all the layers.

In a possible implementation, if the first electronic device packs the encoded layer by using the RTP, correspondingly, the second electronic device unpacks the received video stream of the composed layer by using the RTP; or if the first electronic device packs the encoded layer by using the RTCP, correspondingly, the second electronic device unpacks the received video stream of the composed layer by using the RTCP. Then, the unpacked layer is sent to a decoder, to decode the unpacked layer.

Finally, the HWC in the second electronic device outputs decoded video stream data of all the layers to a frame buffer (FrameBuffer), and outputs the decoded video stream data to the second electronic device for display. Alternatively, the HWC directly outputs all composed layer data to a display of the second electronic device for display.

Optionally, in a possible implementation, the first electronic device may alternatively send the to-be-combined layer to the second electronic device. The second electronic device normally combines, based on the second value, the to-be-combined layer corresponding to the to-be-displayed interface.

Specifically, the first electronic device may encode the to-be-combined layer into a video stream, pack encoded and compressed video stream data according to the real-time transport protocol RTP or the RTCP control protocol, and then send the packed video stream to the second electronic device.

After receiving the video stream of the to-be-combined layer sent by the first electronic device, the second electronic device needs to parse the video stream to obtain all to-be-combined layers. Then, the to-be-combined layer is combined to obtain the composed layer.

Finally, the second electronic device renders the composed layer in the local HWC, and directly outputs the rendered layer to the display of the second electronic device for display. Alternatively, the HWC outputs the rendered layer to a frame buffer (FrameBuffer), and then outputs the rendered layer to the second electronic device for display.

Optionally, in another possible implementation, after SurfaceFlinger in the first electronic device combines all the layers, the local HWC may also complete composition, optimization, and rendering of a remaining layer.

Then, the HWC in the first electronic device sends the rendered and optimized layers to SurfaceFlinger in the first electronic device, and then SurfaceFlinger sends the rendered and optimized layers to the WMS. The WMS sends a composed to-be-combined layer to a projection management module of the first electronic device shown in FIG. 4(b), and the projection management module of the first electronic device sends the composed to-be-combined layer to the second electronic device (for example, a projection management module of the second electronic device) for direct display.

In this implementation, the first electronic device does not need to encode, compress, and pack the composed layer, and send the composed layer to the second electronic device, and then the second electronic device decodes and decompresses the composed layer, and then performs rendering and display, improving efficiency of projection-based display.

According to the projection-based display method provided in embodiments of this application, the first electronic device searches for the security layer in the to-be-combined layer, and then changes the first value of the security flag bit corresponding to the security layer to the second value. The first value identifies or indicates the layer as the security layer, and the second value indicates to normally compose the security layer when combining the to-be-combined layer, so that the display area corresponding to the security layer can be normally displayed on the composed interface. Then, the first electronic device combines the to-be-combined layer based on the second value, and when the first electronic device projects the composed layer including the security layer onto the second electronic device, the display area corresponding to the security layer can be normally displayed on the second electronic device. According to the method provided in this application, a user can obtain display information of the security layer in the second electronic device, and perform, by using hardware (for example a keyboard, a mouse, a microphone, and a speaker) of the second electronic device, an operation on an interface in which the security layer is located, improving user experience.

Optionally, before the first electronic device performs step S720, the first electronic device may determine whether non-secure projection is performed between the first electronic device and the second electronic device.

It should be understood that, in a conventional technology, when secure projection is performed between a first electronic device and a second electronic device, and a to-be-combined layer projected by the first electronic device onto the second electronic device includes a security layer, a display area corresponding to the security layer is normally displayed on the second electronic device. When non-secure projection is performed between the first electronic device and the second electronic device, and the to-be-combined layer projected by the first electronic device onto the second electronic device includes the security layer, the display area corresponding to the security layer displayed on the second electronic device is black.

Therefore, in this embodiment of this application, whether secure projection is performed between the first electronic device and the second electronic device may be determined. If non-secure projection is performed between the first electronic device and the second electronic device, the projection-based display method provided in this embodiment of this application may be performed.

In a possible implementation, when the first electronic device and the second electronic device are connected in a wireless manner, it indicates that projection between the first electronic device and the second electronic device is non-secure projection.

For example, the first electronic device and the second electronic device may determine, by determining whether the HDCP protocol is supported, whether the first electronic device and the second electronic device are connected in the wireless manner. When the first electronic device and the second electronic device are connected in the wireless manner, it indicates that projection between the first electronic device and the second electronic device is non-secure projection.

Specifically, when both the first electronic device and the second electronic device support the HDCP protocol, it indicates that the first electronic device and the second electronic device are connected in a wired manner, and it indicates that secure projection is performed between the first electronic device and the second electronic device; when at least one of the first electronic device and the second electronic device does not support the HDCP protocol, it indicates that the first electronic device and the second electronic device are connected in the wireless manner, and non-secure projection is performed between the first electronic device and the second electronic device.

In this embodiment of this application, when the first electronic device performs projection onto the second electronic device, the first electronic device and the second electronic device respectively determine whether the HDCP protocol is supported in the first electronic device and the second electronic device, and then the second electronic device sends a determining result to the first electronic device. When the first electronic device determines that at least one of the first electronic device and the second electronic device does not support the HDCP protocol, it indicates that projection between the first electronic device and the second electronic device is non-secure projection.

When secure projection is performed between the first electronic device and the second electronic device, a flag bit of the to-be-projected interface created by the first electronic device is secure, and the flag bit indicates that the to-be-projected interface is a secure interface, it indicates that secure projection is performed between the first electronic device and the second electronic device. When the flag bit of the to-be-projected interface is not secure, the flag bit indicates that the to-be-projected interface is a non-secure interface, it indicates that projection between the first electronic device and the second electronic device is non-secure projection.

It should be understood that, in this embodiment of this application, the to-be-projected screen may also be understood as a to-be-projected display.

Certainly, whether secure projection is performed between the first electronic device and the second electronic device may be further determined in another manner. This is not limited in this embodiment of this application.

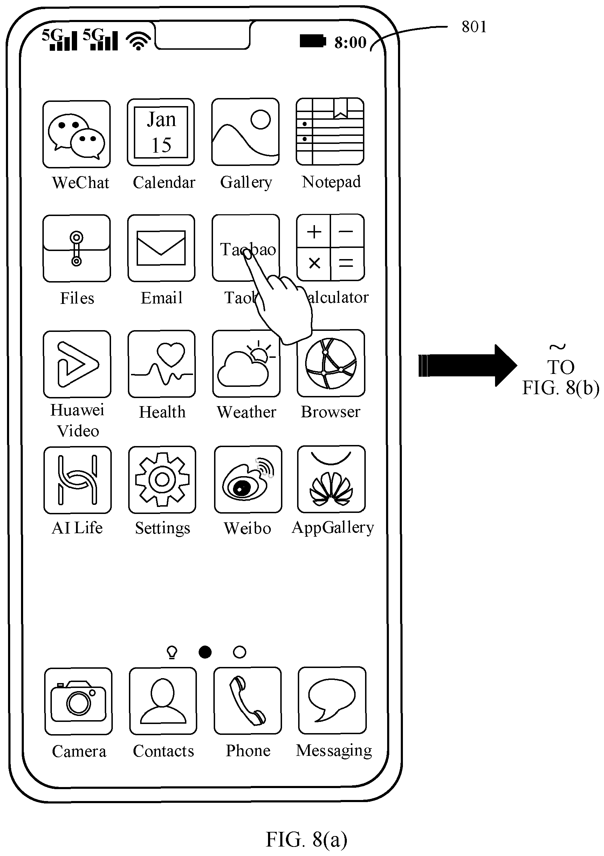

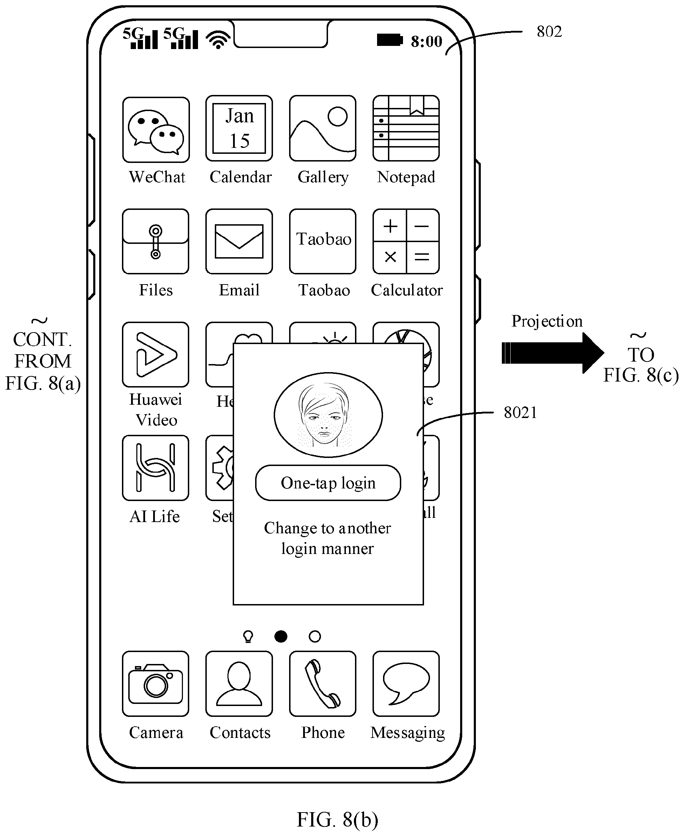

The projection-based display method provided in this application may be applied to a same-source projection scenario or a different-source projection scenario. The following uses an example in which the first electronic device is a smartphone and the second electronic device is a large screen device, to specifically describe an application scenario of the foregoing projection-based display method. FIG. 8(a) to FIG. 8(c) are a diagram of a display interface of a security layer in same-source projection according to an embodiment of this application. FIG. 8(a) shows a current home interface 801 of the smartphone, and the home interface 801 is a home page interface of the smartphone. In response to an operation of tapping a Taobao application icon (a "Taobao" icon shown in FIG. 8(a)) by the user, as shown in FIG. 8(b), the smartphone renders, on a home screen, the home page interface 802 and a Taobao login interface 8021 in the home page interface 802. In response to a projection operation of the user, a WMS in the smartphone detects flag bits of all layers in the interface 802. When it is detected that a flag bit of a security layer 8021 in the interface 802 is 0×80, it indicates that the Taobao login interface 8021 is a security layer, and then a security flag bit of the security layer is changed to 0×30. The value 0×30 indicates that the security layer is normally composed during composition. In this case, when performing multi-layer composition, SurfaceFlinger in the smartphone traverses the flag bits of all the layers. When it is detected that a flag bit of a layer is 0×30, the layer is normally composed. Finally, SurfaceFlinger encodes data corresponding to a composed layer into a standard video, and sends the standard video to the large screen device.

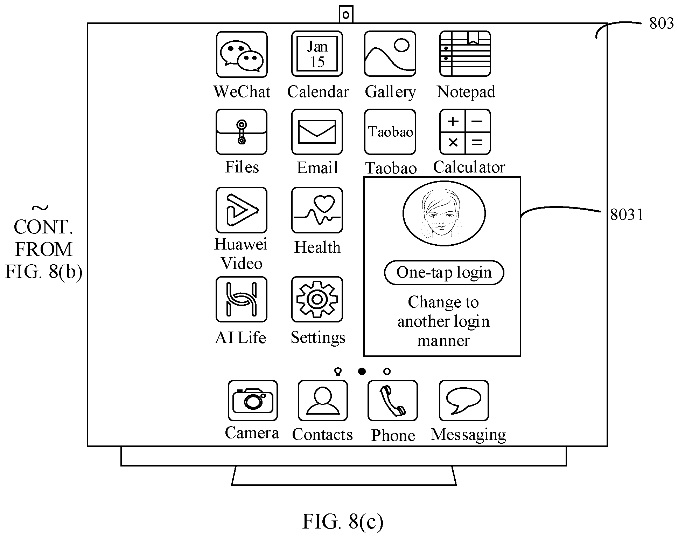

Based on same-source projection, after a large screen device receives a standard video stream corresponding to surface encoding that corresponds to an application interface rendered on the home screen of the smartphone, the large screen device displays, based on the standard video stream, a home page interface 803, and a Taobao login interface 8031 included in the home page interface 803. As shown FIG. 8(c), although the layer corresponding to the Taobao login interface is the security layer, the Taobao login interface 8031 can still be normally displayed after being displayed on the large screen device, and the security layer is unavailable for screenshot, screen recording, and multi-task display.

It should be understood that, in a scenario shown in FIG. 8(b), the Taobao login interface 8021 on the smartphone is displayed in a form of a small window. In another scenario, the Taobao login interface 8021 may alternatively be displayed in full screen. In this case, when the Taobao login interface 8021 is displayed in full screen and is projected onto the large screen device, the Taobao login interface 8031 of the large screen device may also be displayed in full screen. Although the layer corresponding to the Taobao login interface is the security layer, the Taobao login interface 8031 can still be normally displayed after being displayed on the large screen device.

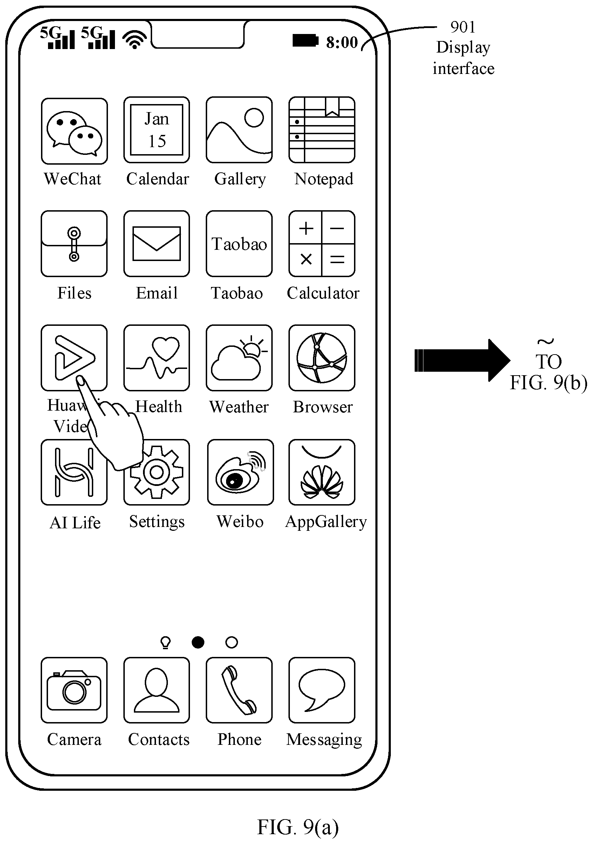

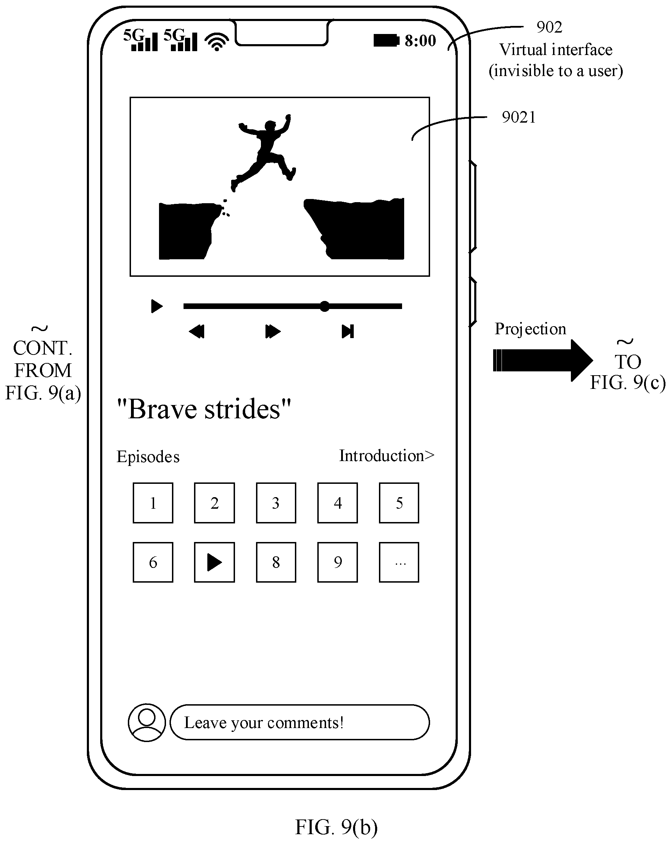

FIG. 9(a) to FIG. 9(c) are a diagram of a display interface of a security layer in different-source projection according to an embodiment of this application. FIG. 9(a) shows a current home interface 901 of the smartphone, and the home interface 901 is a home page interface of the smartphone. In response to an operation of tapping a Huawei video application icon (a "Huawei video" icon shown in FIG. 9(a)) by a user, the mobile phone renders the home interface 901 on a home screen 902, and renders a Huawei video interface 9021 (for example, a "Brave strides" documentary shown in FIG. 9(b)) on a virtual screen. In response to a projection operation of the user, a WMS in the smartphone detects flag bits of layers in the interface 902. When it is detected that a flag bit of a security layer 9021 in the interface 902 is 0×80, it indicates that the video play interface 9021 is a security layer, and then a security flag bit of the security layer is changed to 0×30. The value 0×30 indicates that the security layer is normally composed during composition. In this case, when performing multi-layer composition, SurfaceFlinger in the smartphone traverses the flag bits of all the layers. When it is detected that a flag bit of a layer is 0×30, the layer is normally composed. Finally, SurfaceFlinger in the smartphone encodes data corresponding to a composed layer into a standard video stream, and sends the standard video stream to the large screen device.

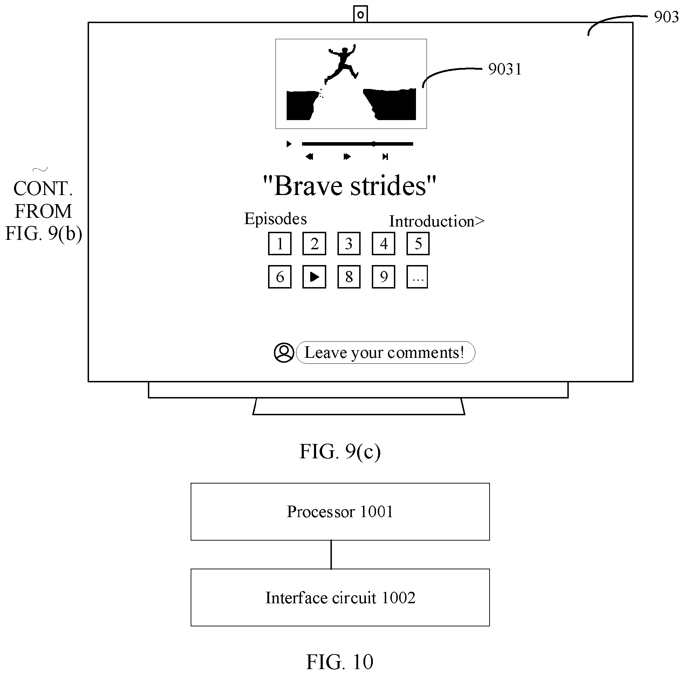

Based on different-source projection, as shown in FIG. 9(c), after the large screen device (namely, the second electronic device) receives a standard video stream that is from the smartphone (namely, the first electronic device) and that corresponds to the application interface rendered on the virtual screen, the large screen device displays a video application interface based on the standard video stream. It should be noted that, although the video display interface on the virtual screen includes the security layer, a display interface 9031 corresponding to a security layer in a home interface 903 of the large screen device is normally displayed, and the security layer is unavailable for screenshot, screen recording, and multi-task display.

It should be understood that, in a scenario shown in FIG. 9(b), the Huawei video interface 9021 on the smartphone is displayed in a form of a small window. In another scenario, the Huawei video interface 9021 may alternatively be displayed in full screen. In this case, when the Huawei video interface 9021 is displayed in full screen, and is projected onto the large screen device, the Huawei video interface 9031 of the large screen device may also be displayed in full screen. Although a layer corresponding to the Huawei video interface is a security layer, the Huawei video interface 9031 can still be normally displayed after being displayed on the large screen device.

An embodiment of this application further provides a chip system. As shown in FIG. 10, the chip system includes at least one processor 1001 and at least one interface circuit 1002. The processor 1001 and the interface circuit 1002 may be connected through a line. For example, the interface circuit 1002 may be configured to receive a signal from another apparatus (for example, a memory of any one of the foregoing electronic devices). For another example, the interface circuit 1002 may be configured to send a signal to another apparatus (for example, the processor 1001). For example, the interface circuit 1002 may read instructions stored in the memory, and send the instructions to the processor 1001. When the instructions are executed by the processor 1001, an electronic device may be enabled to perform steps performed by any electronic device in the foregoing embodiments. Certainly, the chip system may further include another discrete component. This is not specifically limited in this embodiment of this application.

It should be further understood that division of the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a specific chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

An embodiment of this application further provides an apparatus. The apparatus is included in an electronic device (for example, a first electronic device or a second electronic device), and the apparatus has a function of implementing behavior of the electronic device in any one of the foregoing embodiments. The function may be implemented by hardware, or may be implemented by hardware executing corresponding software. The hardware or the software includes at least one module or unit corresponding to the foregoing function.

This application further provides an electronic device (for example, a first electronic device or a second electronic device). The electronic device includes the apparatus provided in the foregoing embodiments of this application.

An embodiment of this application further provides a computer-readable storage medium, configured to store computer program code. The computer program includes instructions used to perform steps of performing interface display by the electronic device (for example, a first electronic device or a second electronic device) in any one of the foregoing embodiments provided in embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, an electronic device is enabled to perform step performed by the electronic device or step of performing interface display in any one of the foregoing embodiments.

An embodiment of this application further provides a chip. The chip includes a processing unit and a communication unit. The processing unit may be, for example, a processor, and the communication unit may be, for example, an input/output interface, a pin, a circuit, or the like. The processing unit may execute computer instructions, so that an electronic device performs any projection-based display method provided in embodiments of this application.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the projection-based display method performed by electronic devices. The processing unit and the storage unit may be decoupled, are separately disposed on different physical devices, and are connected in a wired or wireless manner to implement respective functions of the processing unit and the storage unit, to support a system chip in implementing various functions in the foregoing embodiments. Alternatively, the processing unit and the memory may be coupled to a same device.

The electronic device, the apparatus, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

An embodiment of this application further provides a graphical user interface on an electronic device. The electronic device includes a display, a camera, a memory, and one or more processors. The one or more processors are configured to execute one or more computer programs stored in the memory. The graphical user interface includes a graphical user interface displayed when the electronic device performs steps performed by the electronic device in any one of the foregoing embodiments.

It may be understood that, to implement the foregoing functions, the electronic device and the like include a hardware structure and/or a software module corresponding to each function. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

The foregoing descriptions about implementations allow a person skilled in the art to understand that, for the purpose of convenient and brief description, division of the foregoing functional modules is taken as an example for illustration. During actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A projection-based display method, applied to a first electronic device, wherein the first electronic device establishes a projection connection to a second electronic device, and the method comprises:
determining a security layer in a to-be-combined layer of a to-be-projected interface, wherein a flag bit of the security layer is a first value;
changing the first value to a second value;
combining the to-be-combined layer based on the second value, to normally display a display area corresponding to the security layer; and
sending projection data to the second electronic device, wherein the projection data comprises the composed layer.

2. The method according to claim 1, wherein before the determining a security layer in a to-be-combined layer of a to-be-projected interface, the method further comprises:
determining that projection between the first electronic device and the second electronic device is non-secure projection.

3. The method according to claim 1 or 2, wherein in the composed layer, the display area corresponding to the security layer is unavailable for screenshot, screen recording, and multi-task display.

4. The method of any one of claims 1 to 3, wherein a window manager service WMS in the first electronic device changes the first value to the second value.

5. The method according to any one of claims 1 to 4, wherein an interface composition system SurfaceFlinger in the first electronic device combines the to-be-combined layer based on the second value.

6. The method according to any one of claims 1 to 5, wherein the first value comprises: 0×80.

7. The method according to any one of claims 1 to 6, wherein the second value comprises 0×30.

8. The method according to any one of claims 2 to 7, wherein when the first electronic device and the second electronic device are connected in a wireless manner, the first electronic device is in a non-secure projection state.

9. The method according to any one of claims 2 to 8, wherein when a flag bit of the to-be-projected interface indicates that the to-be-projected interface is a non-secure interface, the first electronic device is in a non-secure projection state.

10. The method according to any one of claims 1 to 9, wherein the first electronic device performs projection onto the second electronic device in a same-source projection manner or a different-source projection manner.

11. A projection-based display system, wherein the system comprises a first electronic device and a second electronic device, and the first electronic device is configured to perform projection onto the second electronic device;
the first electronic device is configured to determine a security layer in a to-be-combined layer of a to-be-projected interface, wherein a flag bit of the security layer is a first value;
the first electronic device is further configured to change the first value to a second value;
the first electronic device is further configured to combine the to-be-combined layer based on the second value, to normally display a display area corresponding to the security layer; and
the first electronic device is further configured to send projection data to the second electronic device, wherein the projection data comprises the composed layer.

12. The system according to claim 11, wherein before the first electronic device determines the security layer in the to-be-combined layer of the to-be-projected interface, the first electronic device is further configured to determine that projection between the first electronic device and the second electronic device is non-secure projection.

13. The system according to claim 11 or 12, wherein in the composed layer, the display area corresponding to the security layer is unavailable for screenshot, screen recording, and multi-task display.

14. The system of any one of claims 11 to 13, wherein a WMS in the first electronic device is configured to change the first value to the second value.

15. The system according to any one of claims 11 to 14, wherein SurfaceFlinger in the first electronic device is configured to combine the to-be-combined layer based on the second value.

16. The system according to any one of claims 11 to 15, wherein the first value comprises 0×80.

17. The system according to any one of claims 11 to 16, wherein the second value comprises 0×30.

18. The system according to any one of claims 12 to 17, wherein when the first electronic device and the second electronic device are connected in a wireless manner, the first electronic device is in a non-secure projection state.

19. The system according to any one of claims 12 to 18, wherein when a flag bit of the to-be-projected interface indicates that the to-be-projected interface is a non-secure interface, the first electronic device is in a non-secure projection state.

20. The system according to any one of claims 11 to 19, wherein the first electronic device performs projection onto the second electronic device in a same-source projection manner or a different-source projection manner.

21. An electronic device, wherein the electronic device comprises a processor and a memory, the memory is configured to store instructions, and the processor is configured to read the instructions to perform the method according to any one of claims 1 to 10.

22. A computer-readable storage medium, wherein the computer-readable storage medium stores a computer program, the computer program comprises program instructions, and when the program instructions are executed by a processor, the processor is enabled to perform the method according to any one of claims 1 to 10.

23. A chip, comprising: a processor, configured to invoke a computer program from a memory and run the computer program, to enable a communication device on which the chip is installed to perform the method according to any one of claims 1 to 10.
